# EUROPÄISCHE PATENTSCHRIFT

(11) **EP 0 475 949 B1**
(45) Veröffentlichungstag und Bekanntmachung des Hinweises auf die Patenterteilung: **13.07.1994**
(21) Anmeldenummer: 90905417.3
(22) Anmeldetag: 10.04.1990
(51) Int. Cl.: F16L 39/00, F16L 17/10

(54) **VERBINDUNGSELEMENT**
CONNECTING ELEMENT
ELEMENT DE LIAISON

(43) Veröffentlichungstag der Anmeldung: 25.03.1992
(73) Patentinhaber: AMETEX AG, CH-8867 Niederurnen (CH); REDCO N.V., 1880 Kapelle op den Bos (BE); SOCIETE ETEX, F-75008 Paris (FR); ERSAG Systeme AG, CH-8706 Meilen (CH)
(72) Erfinder: KELDANY, Rachid, CH-8124 Maur (CH)
(74) Vertreter: Troesch Scheidegger Werner AG
(86) Internationale Anmeldenummer: CH9000099
(87) Internationale Veröffentlichungsnummer: WO9115705

(56) Entgegenhaltungen:
- EP-A- 0 253 588
- DE-U- 8 702 997
- US-A- 3 222 076
- US-A- 3 258 271

## Beschreibung

Die vorliegende Erfindung betrifft ein Verbindungselement zum Abdichten des Spaltes zwischen der Wand eines äusseren Rohres, an welches eine Rohrabzweigung angeschlossen ist, und der Wand eines inneren Auskleidungsrohres, an einer durch die beiden Rohrwände führenden Abzweigöffnung.

Heute werden revisionsbedürftige Rohrleitungen vermehrt dadurch instandgestellt oder repariert, dass in die Rohrleitung eine Auskleidung, in Form eines weiteren Rohres mit etwas geringerem Aussendurchmesser, eingebracht wird. Diese rohrförmige Auskleidung ("liner") wird mittels in letzter Zeit entwickelter Techniken eingebracht. Dazu gehört, dass die Auskleidung nach deren Einbringung an den Stellen, wo Rohrabzweigungen vorhanden sind, mit entsprechenden Oeffnungen versehen werden muss. Da die Rohrleitungen üblicherweise nicht begehbar sind, geschieht dies mittels durch das Rohr verfahrbaren Geräten, welche mit ferngesteuerten Schneidwerkzeugen versehen sind (Roboter).

Es stellt sich nun die Aufgabe, an den Verbindungsstellen zwischen den Rohrabzweigungen und der Rohrwand des nachträglich eingesetzten Innenrohres den Spalt zu überbrücken und dicht zu verschliessen, welcher bei jeder Durchtrittsöffnung zwischen der inneren und der äusseren Rohrwand vorhanden ist, damit einerseits der Rohrinhalt nicht in den Zwischenraum zwischen Innen- und Aussenwand gelangen kann und andererseits, falls der genannte Zwischenraum zur Stabilisierung mit Material aufgefüllt wird (z.B. aushärtbare Zementmörtel), dieses Füllmaterial nicht in das Rohr austreten kann.

Es ist zwar bekannt, ringförmige Schläuche zwischen zwei konzentrische Rohre einzusetzen und aufzuweiten, um so eine Dichtung zu schaffen. Diese Elemente eignen sich jedoch aus konstruktiven Gründen nicht zur Lösung des vorliegenden Problems, u.a. auch deswegen, weil ein solches Element mittels der zur Verfügung stehenden Geräte gar nicht an die gewünschte Stelle eingesetzt werden könnte.

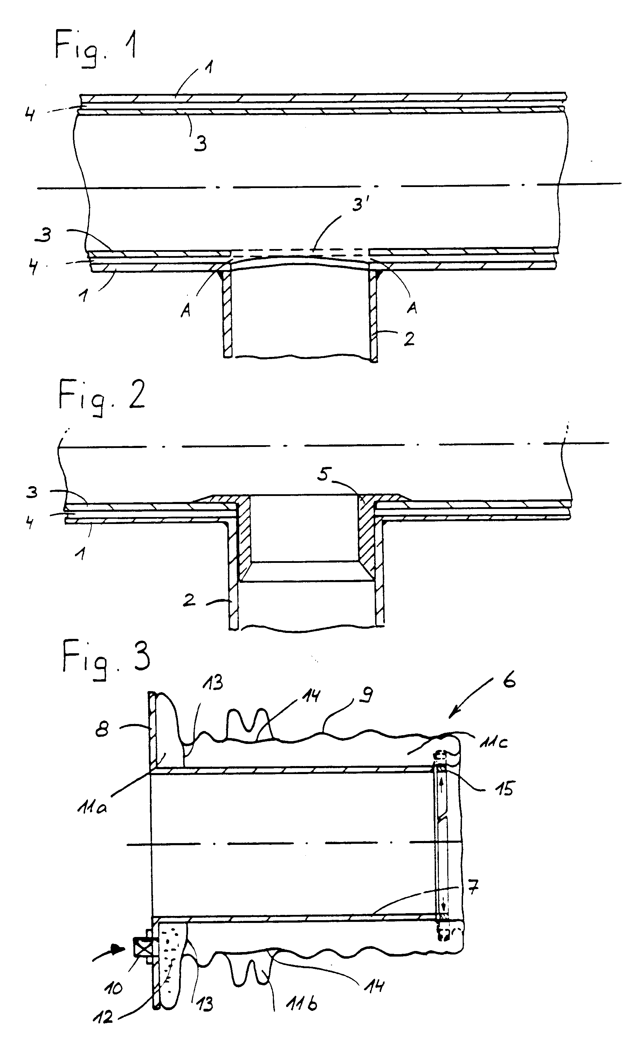

Eine bisher bekannte Lösung bestand aus einer Art Hülse aus gummielastischem Material, welche sich dank iher Elastizität an die Dichtstellen anlegen kann. Der Nachteil dieser Lösung, die in Fig. 2 der Zeichnung gezeigt ist, besteht darin, dass das Element sehr genau gefertigt sein muss, um die angestrebte Wirkung zu zeigen. Toleranzen sind trotz der Elastizität des Elementes nur in engen Grenzen aufzunehmen. Darüberhinaus würde die Dichtwirkung beim Ausfüllen des Rohrzwischenraumes unter dem Druck des eingefüllten Materials wieder aufgehoben.

Ebenfalls bekannt aus EP-253 588 ist eine mittels Luft oder Flüssigkeit an der Uebergangsstelle aufweitbare Dichtvorrichtung, welche vorübergehend angebracht wird, nach dem Erhärten eines anschliessend in den Rohrzwischenraum eingefüllten Füllmaterials aber wieder entfernt werden muss, da diese Vorrichtung die Abzweigöffnung praktisch verschliesst. Mit dieser Vorrichtung kann somit der Spalt nicht bleibend abgedichtet werden und es eignet sich nicht für den Einsatz bei nicht ausgefüllten Rohrzwischenräumen.

Die Aufgabe wird nun dank des erfindungsgemässen Elementes auf einfache Weise gelöst. Das Element zeichnet sich erfindungsgemäss aus durch die im kennzeichnenden Teil von Anspruch 1 aufgeführten Merkmale.

Das Material der Hülle soll ausserordentlich geschmeidig sein, um sich beim Verformen an die Formen der gegenüberliegenden Konstruktionselemente dicht anzulegen und die Wände und dergleichen teilweise zu umgreifen. Die Hülle kann aus elastischem Material bestehen oder balgartig ausgebildet sein.

Vorzugsweise ist der Raum zwischen Innen- und Aussenwand der aufweitbaren Hülse mittels Trennwänden in mehrere Abteile unterteilt, wobei die Trennwände unter vorbestimmtem Innendruck zerstörbar sind (Druck des Füllmedium), so dass sich die Abteile nacheinander aufweiten lassen.

Die Erfindung wird nachstehend anhand der Zeichnung noch etwas näher erläutert. In der Zeichnung zeigt:
Fig. 1 einen Ausschnitt, rein schematisch, aus einer Rohrleitung mit Abzweigung, welche mit einer eine Doppelwand bildenden Innenauskleidung ("liner") versehen ist;
Fig. 2 eine herkömmliche Ueberbrückung bzw. Abdichtung der Verbindungsstelle zwischen Hauptrohrleitung, Auskleidung und Abzweigrohr;
Fig. 3 eine Ausführungsform eines erfindungsgemässen Verbindungselementes, und
Fig. 4 und 5 ähnliche Ansichten wie Fig. 2, mit einem erfindungsgemässen Verbindungselement an der Rohrabzweigstelle.

Fig. 1 der Zeichnung zeigt rein schematisch eine Rohrleitung 1 mit einer Abzweigung 2 (z.B. Zubringerleitung), wobei die Rohrleitung 1 durch ein nachträglich eingebrachtes Auskleidungsrohr 3 ("liner") ausgekleidet ist. Die Auskleidung dient der Sanierung der Rohrleitung 1 und wurde mittels üblicher Techniken eingebracht. Der Aussendurchmesser des Auskleidungsrohres 3 ist ewas kleiner als der Innendurchmesser des Rohres 1. Der Zwischenraum 4 zwischen den Rohren 1 und 3 wird zur Stabilisierung vorzugsweise durch Injektion von erhärtendem Material (z.B. Zementmörtel) ausgefüllt. Mittels eines ferngesteuerten Gerätes (Roboter) wird an der vorher ermittelten Stelle die Wand des Innenrohres 3 an der Stelle 3' ausgebrochen bzw. ausgeschnitten, um die Verbindung mit dem Abzweigrohr 2 herzustellen. Da das Rohr 2 nur mit der Wand des Rohres 1 verbunden, z.B. verschweisst ist, ist der Spalt 4 an den Stellen A offen. Diese Stellen A müssen dicht überbrückt und. verschlossen werden, damit weder der Inhalt der Rohre 1 oder 2 in den Zwischenraum 4 eindringen kann, noch ein gegebenenfalls in den Zwischenraum 4 eingebrachtes Injektionsgut an den Stellen A ausfliessen kann.

Fig. 2 der Zeichnung zeigt, wie bisher die genannte Verbindungsstelle abgedichtet wurde. Dazu wurde eine Art Pfropfen 5 aus gummielastischem Material in die Verbindungsstelle eingeführt (beispielsweise durch Einzug durch das Rohr 2). Diese Lösung ist aus verschiedenen Gründen unbefriedigend: Einerseits müssen die Pfropfen 5 relativ genau dimensioniert sein, um eine Abdichtung zu gewährleisten. Andererseits würde diese Dichtung aber beim Einbringen von Injektionsmasse in den Zwischenraum 4 wegen der Elastizität des Pfropfens 5 wieder aufgehoben.

Fig. 3 der Zeichnung zeigt ein erfindungsgemässes Verbindungselement 6. Es besteht aus einer Hülse mit einer Innenwand 7 aus relativ formsteifem oder biegeelastischem Material, z.B. aus Hartgummi oder Kunststoff, mit am einen Ende vorgesehenem Radialflansch 8 und einer auf der Aussenseite der Innenwand 7 vorgesehenen, balgartigen Hüllenwand 9 (Aussenwand) aus leicht verformbarem Material. Ueber eine in der Innenwand 7 oder im Flansch 8 vorgesehenen Einfüllöffnung 10, die vorzugsweise als Ventil ausgebildet ist, kann der Innenraum 11 des so gebildeten Elementes mit einem erhärtenden Füllmedium 12 aufgeweitet werden. Der Innenraum 11 des Verbindungselementes 6 ist beispielsweise mittels Trennwänden 13,14 in drei Abteile 11a, 11b und 11c unterteilt. Die Trennwände 13, 14 sind unter einem vorbestimmten Innendruck, verursacht durch das Füllmedium 12, zerstörbar, so dass sich die Abteile 11a, 11b und 11c nacheinander aufweiten, wobei sich die Hüllenwand 9 jeweils an die Konturen von aussenliegenden Elementen anschmiegt und danach sich das Verbindungselement verfestigt (als Füllmedium eignet sich ein erhärtendes Kunstharz).

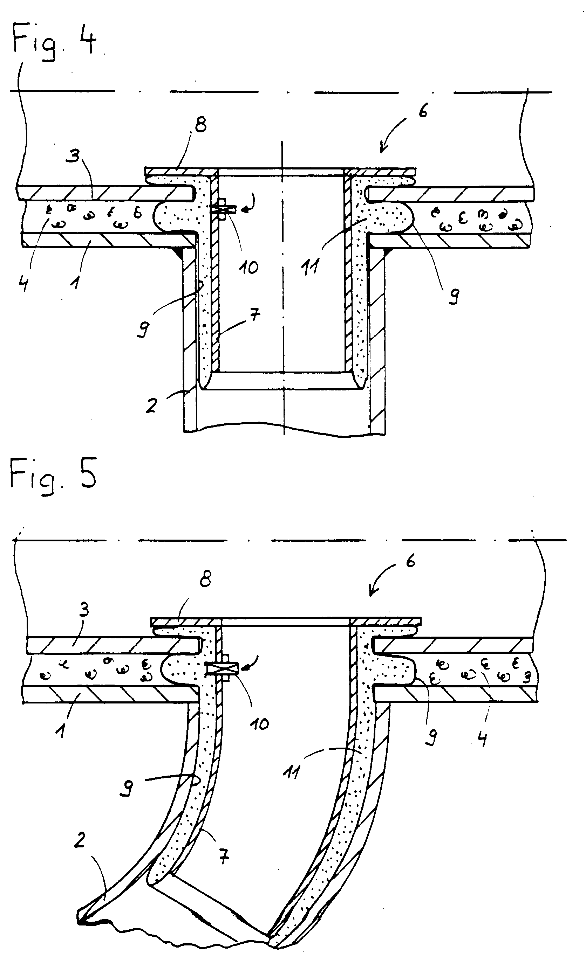

Fig. 4 und 5 der Zeichnung zeigen eingesetzte, aufgeweitete Verbindungselemente 6. Daraus ist ersichtlich, dass sich mit dem erfindungsgemässen Verbindungselement eine einwandfreie Abdichtung der Rohrverbindungsstelle herstellen lässt, wobei es belanglos ist, ob das Abzweigrohr 2 rechtwinklig oder unter einem beliebigen Winkel vom Hauptrohr 1 wegführt.

Wie Fig. 3 zeigt, können am Ende des Elementes, welches dazu vorgesehen ist, in die Rohrabzweigung eingeführt zu werden, mechanische Spreizmittel vorgesehen sein, welche in einem beliebig wählbaren Zeitpunkt (nach dem Einsetzen des Elementes, jedoch ggf. nach dem Aufweiten der Hüllenwand) auslösbar sind, um das Ende des Elementes dichtend gegen die Innenwand der Rohrabzweigung anzulegen.

Die Spreizmittel können z.B. aus einem aufweitbaren, ggf. durch eigene Federkraft, Spreizring 15 bestehen. Der Spreizring 15 kann z.B. auf geeignete Weise an der Hülse 7 oder an der Hüllenwand 9 befestigt sein.

## Patentansprüche

1. Ringförmiges Verbindungselement mit an einem Ende vorgesehenem Radialflansch, welches den Spalt zwischen der Wand eines äusseren Rohres, an welches eine Rohrabzweigung angeschlossen ist, und der Wand eines inneren Auskleidungsrohres, an einer durch die beiden Rohrwände führenden Abzweigöffnung überbrückt und bleibend abdichtet, gekennzeichnet durch eine durch Zufuhr eines aushärtbaren, fliessfähigen Fällmediums (12) in den Raum (11) zwischen einer Innen- und einer Aussenwand (7 bzw. 9) in radial nach aussen führender Richtung verformbare ringförmige Hülse (6), welche mit wenigstens einer Zuführöffnung (10) für das Füllmedium versehen ist, wobei die ringförmige Hülse (6) einen formsteifen oder biegeelastischen rohrförmigen Innenabschnitt (7) aufweist, auf dessen Aussenseite eine unter dem Einfluss des Füllmediums (12) begrenzt aufweitbare Hüllenwand (9) angebracht ist.

2. Verbindungselement nach Anspruch 1, dadurch gekennzeichnet, dass der Radialflansch am Ende des rohrförmigen Innenabschnitts (7) als formsteifer oder biegeelastischer Flansch (8) vorgesehen ist.

3. Verbindungselement nach einem der Ansprüche 1-2, dadurch gekennzeichnet, dass der Raum (11) zwischen Innen- und Aussenwand (7 bzw. 9) der Hülse (6) mittels unter vorbestimmtem Innendruck zerstörbaren Trennwänden (13,14) in mehrere nacheinander aufweitbare Abteile (11a,11b, 11c) unterteilt ist.

4. Verbindungselement nach einem der Ansprüche 1-3, dadurch gekennzeichnet, dass die Zuführöffnung (10) als Ventil, beispielsweise als Rückschlagventil, ausgebildet ist.

5. Verbindungselement nach einem der Ansprüche 1-4, dadurch gekennzeichnet, dass die aufweitbare Hüllenwand (9) balgartig ausgebildet ist.

6. Verbindungselement nach einem der Ansprüche 1-5, dadurch gekennzeichnet, dass an seinem einen Ende, welches dazu vorgesehen ist in die Rohrabzweigung eingeführt zu werden, mechanische Spreizmittel vorgesehen sind, welche in einem beliebig wählbaren Zeitpunkt auslösbar sind, um das Elementende dichtend gegen die Innenwand der Rohrabzweigung anzulegen.

7. Verbindungselement nach Anspruch 6, dadurch gekennzeichnet, dass die Spreizmittel einen vorzugsweise federnd aufweitbaren Spreizring umfassen.

## Claims

1. A ring-shaped connecting element having at one end a radial flange provided for bridging and permanently sealing the gap between the wall of an outer tube to which is connected a branch pipe and the wall of an inner relining tube, said gap appearing at a branching-off opening leading through both of said tube walls, characterized by a ring-shaped sleeve (6) deformable in a radially outward direction by supplying a hardenalbe flowable filler medium (12) into the room (11) between an inner and an outer wall (7 resp. 9) of said sleeve having at least one supply opening (10) for the filler medium, whereby said ring-shaped sleeve (6) comprises a rigid or flexible tubular inner section (7) provided on its outer side with a sheath (9) expandable within limits by means of said filler medium (12).

2. Connecting element according to claim 1, characterized in that said radial flange at the end of the tubular inner section (7) is a rigid or flexible flange (8).

3. Connecting element according to any of claims 1-2, characterized in that the room (11) between the inner and the outer wall (7 resp. 9) of said sleeve (6) is subdivided into a plurality of successively expandable compartments by means of partition walls destructible under a predetermined internal pressure.

4. Connecting element according to any of claims 1-3, characterized in that said supply opening (10) is formed by a valve, e.g. a nonreturn valve.

5. Connecting element according to any of claims 1-4, characterized in that said expandable sheath (9) has the form of a bellows.

6. Connecting element according to any of claims 1-5, characterized in that at its end which is provided for being introduced into the branch pipe mechanical expanding means are mounted which may be released at any desired moment to thereby sealingly press the end of the element against the inner wall of said branch pipe.

7. Connecting element according to claim 6, characterized in that said expanding means comprise an expanding ring which is preferably elastically expandable.

## Revendications

1. Elément de liaison en forme d'anneau présentant à une extrémité une collerette radiale et destiné à recouvrir et étancher de manière permanente la fente entre la paroi d'un tuyau extérieur auquel est relié un tuyau de dérivation et la paroi d'un tuyau de revêtement intérieur, fente se trouvant à une ouverture de bifurcation traversant lesdites deux parois, caractérisé par un manchon (6) en forme d'anneau déformable radialement vers l'extérieur par l'alimentation d'un matériau fluide durcissable (12) dans la chambre (11) entre une paroi intérieure et extérieure (7 resp. 9) du manchon présentant au moins une ouverture d'alimentation (10) pour le matériau de remplissage, le manchon en forme d'anneau (6) comprenant une partie intérieure (7) sous forme d'un tuyau rigide ou flexible élastiquement dont la face extérieure est munie d'une enveloppe (9) expansible dans certaines limites sous l'influence dudit matériau de remplissage (12).

2. Elément de liason selon la revendication 1, caractérisé en ce que la collerette radiale prévue à l'etrémité de la partie intérieure sous forme de tuyau (7) a la forme d'une collerette (8) indéformable ou flexible élastiquement.

3. Elément de liaison selon l'une des revendications 1-2, caractérisé en ce que la chambre (11) entre la paroi intérieure et extérieure (7 resp. 9) du manchon (6) est subdivisée en plusieurs compartiments (11a, 11b, 11c) expansibles successiblement au moyen de parois de séparation destructibles sous une pression intérieure prédéterminée.

4. Elément de liaison selon l'une des revendications 1-3, caractérisé en ce que l'ouverture d'alimentation (10) est une soupape, par exemple une soupape de non-retour.

5. Elément de liaison selon l'une des revendications 1-4, caractérisé en ce que l'enveloppe expansible (9) est formée par une paroi annelée.

6. Elément de liaison selon l'une des revendications 1-5, caractérisé en ce que l'une de ses extrémités qui est destinée à être introduite dans le tuyau de dérivation est munie de moyens d'écartement mécaniques qui peuvent être actionnés à tout moment voulu pour appliquer l'extrémité de l'élément de manière étanche contre la paroi intérieure du tuyau de dérivation.

7. Elément de liaison selon la revendication 6, caractérisé en ce que les moyens d'écartement comprennent un anneau d'écartement qui est de préférence élastiquement expansible.
